(19) **Europäisches Patentamt / European Patent Office / Office européen des brevets**

(11) **EP 4 412 274 A1**

(12) **EUROPEAN PATENT APPLICATION**
published in accordance with Art. 153(4) EPC

(43) Date of publication:
**07.08.2024 Bulletin 2024/32**

(21) Application number: **21959342.3**

(22) Date of filing: **29.09.2021**

(51) International Patent Classification (IPC):
**H04W 16/26** (2009.01)   **H04W 56/00** (2009.01)
**H04W 84/06** (2009.01)

(52) Cooperative Patent Classification (CPC):
**H04W 16/26; H04W 56/00; H04W 84/06**

(86) International application number:
**PCT/JP2021/035987**

(87) International publication number:
**WO 2023/053298 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DOCOMO, INC.**
**Tokyo 100-6150 (JP)**

(72) Inventors:
• **YOSHIOKA, Shohei**
  **Tokyo 100-6150 (JP)**
• **KURITA, Daisuke**
  **Tokyo 100-6150 (JP)**
• **NAGATA, Satoshi**
  **Tokyo 100-6150 (JP)**
• **LIU, Wenjia**
  **Beijing, 100190 (CN)**
• **WANG, Jing**
  **Beijing, 100190 (CN)**
• **CHEN, Lan**
  **Beijing, 100190 (CN)**

(74) Representative: **Hoffmann Eitle**
**Patent- und Rechtsanwälte PartmbB**
**Arabellastraße 30**
**81925 München (DE)**

(54) **TERMINAL AND COMMUNICATION METHOD**

(57) A terminal that performs a communication with a base station via a satellite or a flying object, the terminal including: a reception unit configured to receive, from the base station in the communication with the base station, a parameter for updating a value of a timing advance common to a plurality of terminals; and a control unit configured to calculate the value of the timing advance, based on the parameter. A reference time of the parameter is defined.

FIG.11

UPDATE COMMON TA AT EVERY FOURTH SIB

FIRST SIB   SECOND SIB   THIRD SIB   FOURTH SIB

OPTION 1: REFERENCE TIME OF COMMON TA PARAMETER

## Description

FIELD OF THE INVENTION

The present invention relates to a terminal and a communication method in a wireless communication system.

BACKGROUND OF THE INVENTION

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Document 1).

Currently, NTN (Non-Terrestrial Network) is also discussed. The NTN provides services to an area that cannot be covered by a terrestrial 5G network mainly due to the cost aspect, by using a non-terrestrial network such as an artificial satellite (hereinafter, referred to as a satellite).

In NR release 17, a technique of performing time synchronization or frequency synchronization based on the satellite orbit is being discussed. For example, the terminal shares the satellite orbit data from the base station. The terminal can calculate a value indicating the timing advance for the service link and can perform pre-compensation or post-compensation of the Doppler shift for frequency compensation, based on the satellite orbit data and on the position information acquired by GNSS (Global Navigation Satellite System).

The common TA and the terminal-specific TA are defined. The terminal updates the common TA, based on the common TAparameter received from the base station, and updates the terminal-specific TA, based on the satellite orbit parameter received from the base station. It is necessary that the terminal is enabled to determine the reference time of broadcast parameters in order to easily estimate the common TA and the terminal-specific TA at a given time point within one valid period. Therefore, the reference time of the satellite orbit parameters is defined.

Citation List

Non-Patent Document

Non-Patent Document 1: 3GPP TS 38.300 V16.6.0 (2021-06)

SUMMARY OF THE INVENTION

TECHNICAL PROBLEM

However, conventionally, because the reference time of the common TA parameters is not defined, in a case where the common TA parameters are updated, which time is to be the reference time of the parameter is unknown, and thus, there is a problem in that the time compensation or frequency compensation cannot be accurately performed.

The present invention has been made in view of the foregoing and is intended to enable an accurate time or frequency compensation in the non-terrestrial network.

SOLUTION TO PROBLEM

According to the disclosed technique, a terminal that performs a communication with a base station via a satellite or a flying object is provided. The terminal includes: a reception unit configured to receive, from the base station in the communication with the base station, a parameter for updating a value of a timing advance common to a plurality of terminals; and a control unit configured to calculate the value of the timing advance, based on the parameter. A reference time of the parameter is defined.

ADVANTAGEOUS EFFECTS OF INVENTION

According to the disclosed technique, a technology is provided that enables performance of an accurate time or frequency compensation in the non-terrestrial network.

BRIEF DESCRIPTION OF THE DRAWINGS

[Fig. 1] is a first drawing for describing a non-terrestrial network.
[Fig. 2] is a second drawing for describing the non-terrestrial network.
[Fig. 3] is a third drawing for describing the non-terrestrial network.
[Fig. 4] is a fourth drawing for describing the non-terrestrial network.
[Fig. 5] is a drawing for describing an enhancement of a timing advance.
[Fig. 6] is a flowchart illustrating an example of a calculation flow of the timing advance.
[Fig. 7] is a drawing for describing a conventional calculation method of the timing advance.
[Fig. 8] is a first drawing for describing a reference time of the common TA parameter related to an embodiment 1-1.
[Fig. 9] is a second drawing for describing the reference time of the common TA parameter related to the embodiment 1-1.
[Fig. 10] is a drawing for describing the relationship between the reference time of the common TA parameter and the estimation of the common TA.
[Fig. 11] is a drawing for describing a method of defining the reference time related to an option 1 of an embodiment 1-3.

[Fig. 12] is a drawing for describing a method of defining the reference time related to an option 2 of the embodiment 1-3.

[Fig. 13] is a drawing for describing a gap between two reference times related to an embodiment 1-4.

[Fig. 14] is a drawing illustrating an example of a functional structure of a base station in an embodiment of the present invention.

[Fig. 15] is a drawing illustrating an example of a functional structure of a terminal in an embodiment of the present invention.

[Fig. 16] is a drawing illustrating an example of a hardware structure of the base station or the terminal in an embodiment of the present invention.

[Fig. 17] is a drawing illustrating an example of a structure of a vehicle in an embodiment of the present invention.

## DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used accordingly. The conventional techniques include, but not limited to, conventional NR or LTE, for example. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, a radio parameter is "configured" may mean that a predetermined value is pre-configured, or may mean that a radio parameter indicated by the base station or the terminal is configured.

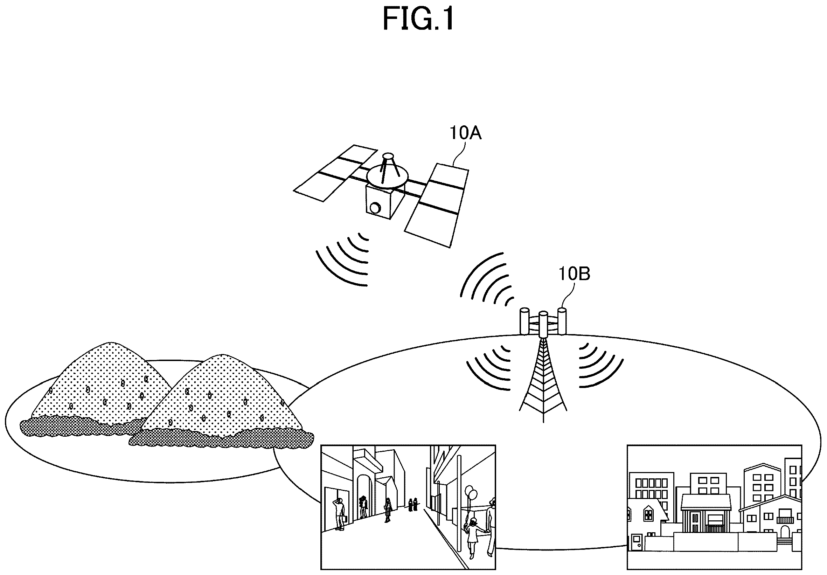

Fig. 1 is a first drawing for describing a non-terrestrial network. The non-Terrestrial Network (NTN) provides services to an area that cannot be covered by a terrestrial 5G network mainly due to the cost aspect, by using a non-terrestrial device such as a satellite. Further, services with higher reliability may be provided by NTN. For example, NTN may be assumed to be applied to IoT (Inter of things), ships, buses, trains, and critical communications. Further, NTN has scalability according to efficient multi-cast or broadcast.

As an example of NTN, as illustrated in Fig. 1, a satellite 10A can provide services to an area such as a mountainous area for which a terrestrial base station is not arranged, by performing retransmission of a signal transmitted by a terrestrial base station 10B.

Note that the terrestrial 5G network may have a structure as described below. The terrestrial 5G network may include one or more base stations 10 and terminals 20. The base station 10 is a communication device that provides one or more cells and performs wireless communication with the terminal 20. Physical resources of the radio signal may be defined in the time domain and the frequency domain, the time domain may be defined by the number of OFDM symbols, and the frequency domain may be defined by the number of sub-carriers or resource blocks. The base station 10 transmits a synchronization signal and system information to the terminal 20. The synchronization signal is, for example, an NR-PSS and an NR-SSS. The system information is transmitted via, for example, a NR-PBCH, and may be referred to as broadcast information.

The base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, both the base station 10 and terminal 20 may perform communications via an SCell (Secondary Cell) and a PCell (Primary Cell) using CA (Carrier Aggregation).

The terminal 20 may be a communication apparatus that includes a wireless communication function such as a smart-phone, a mobile phone, a tablet, a wearable terminal, a communication module for M2M (Machine-to-Machine), or the like. The terminal 20 uses various communication services provided by a wireless communication system, by receiving a control signal or data in DL from the base station 10 and transmitting a control signal or data in UL to the base station 10.

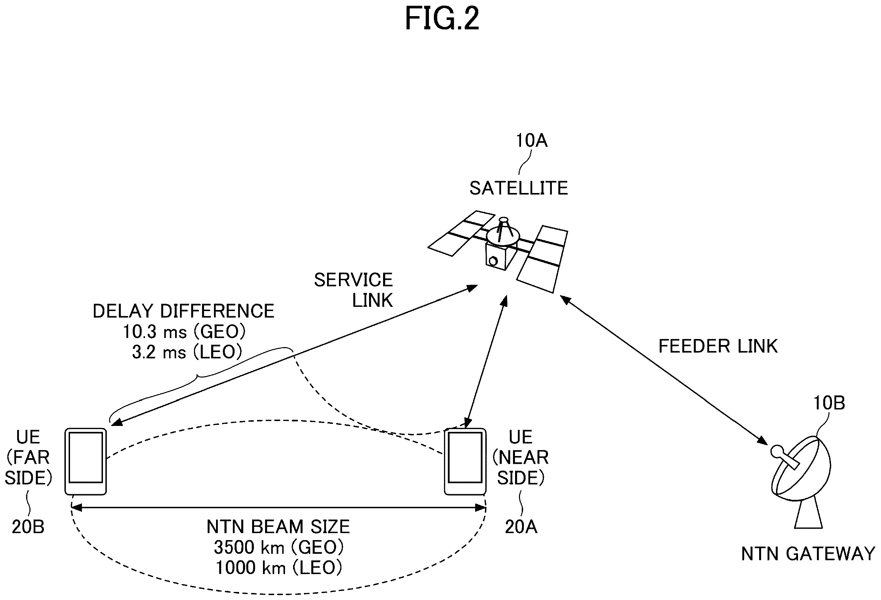

Fig. 2 is a second drawing for describing the non-terrestrial network. In NTN, a cell or an area for each beam is very large when compared with a terrestrial network, TN. Fig. 2 illustrates an example of NTN including retransmissions by a satellite. The connection between a satellite 10A and an NTN gateway 10B is referred to as a feeder link, and the connection between the satellite 10A and a UE 20 is referred to as a service link.

As illustrated in Fig. 2, the delay difference between the near side UE 20A and the far side UE 20B is, for example, 10.3 ms in a case of GEO (Geosynchronous orbit), and 3.2 ms in a case of LEO (Low Earth orbit). Further, the beam size in NTN is, for example, 3500 km in a case of GEO, and 1000 km in a case of LEO.

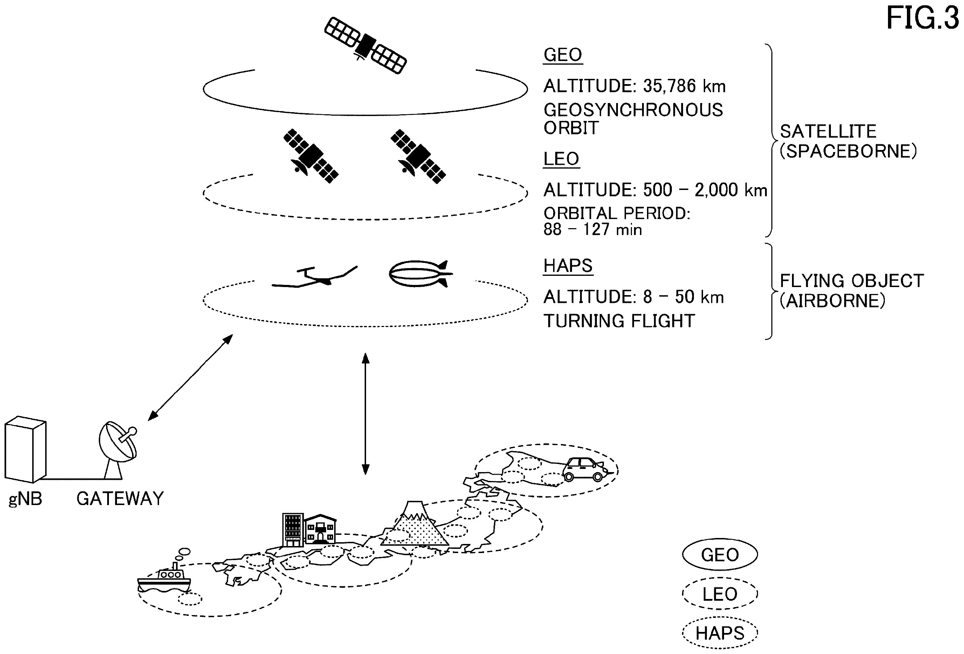

Fig. 3 is a third drawing for describing the non-terrestrial network. As illustrated in Fig. 3, NTN is implemented by a satellite in space or a flying object in the air. For example, the GEO satellite may be a satellite located at altitude 35,786 km, with a geosynchronous orbit. For example, the LEO satellite may be a satellite located at altitude 500 to 2000 km, and orbiting at a period of 88 to 127 minutes. For example, HAPS (High Altitude Platform Station) may be a flying object located at altitude 8 to 50 km, and moving in an orbit.

As illustrated in Fig. 3, the GEO satellite, the LEO satellite and the HAPS flying object may be connected to a terrestrial station gNB via a gateway. In addition, the service area increases in the order of HAPS, LEO, and GEO.

For example, the coverage of the 5G network can be enhanced by NTN, with respect to the area with no service and the area with services. In addition, for example, the continuity, availability, and reliability of services in a ship, bus, train or other important communications can be improved by NTN. Note that NTN may be indicated by transmitting a dedicated parameter to the terminal 20, and the dedicated parameter may be, for example, a parameter related to TA (Timing Advance) determination based on the information related to the satellite or the flying object.

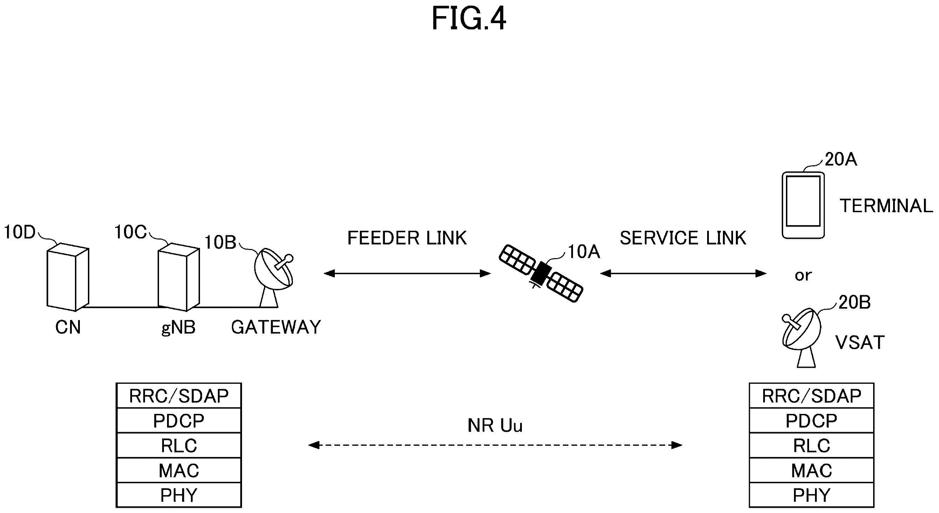

Fig. 4 is a fourth drawing for describing the non-terrestrial network. Fig. 4 illustrates an example of an NTN network architecture that is assumed in a case of transparent payload. As illustrated in Fig. 4, a CN (Core Network) 10D, a gNB 10C and a gateway 10B are connected. The gateway 10B is connected to a satellite 10A via a feeder link. The satellite 10A is connected to a terminal 20A or a VSAT (Very small aperture terminal) 20B via a service link. NR Uu is established between the gNB 10C and the terminal 20A or VSAT 20B.

In addition, as an assumption of the NTN network architecture, FDD may be adopted, or TDD may be available. In addition, the terrestrial cell may be fixed or movable. In addition, the terminal 20 may have GNSS (Global Navigation Satellite System) capability. For example, in FR1, a hand-held device with power class 3 may be assumed. In addition, a VSAT device may be assumed at least in FR2.

In addition, a regenerative payload may be assumed in the NTN network architecture. For example, a gNB function may be installed in the satellite or the flying object. In addition, a gNB-DU may be installed in the satellite or the flying object, and a gNB-CU may be arranged as a terrestrial station.

In NTN, it is necessary to consider the long propagation delay, LEO or HAPS movement, and communications via GEO, LEO or HAPS. Because of these characteristics of NTN, enhancement of HARQ operation is being discussed. For example, the HARQ feedback may be disabled. In a case where the HARQ feedback is disabled, it is possible to transmit two consecutive DL transport blocks in a single HARQ process without waiting for the feedback.

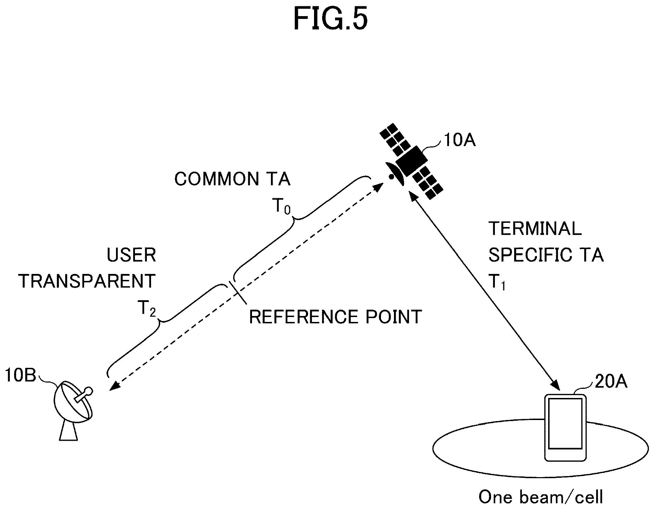

Fig. 5 is a drawing for describing an enhancement of a timing advance. In the conventional techniques such as NR, the timing of the downlink or the uplink is adjusted at the reference point (RP) alone. In other words, the adjustment is performed at the RP so that the timings of the downlink and the uplink are aligned. The RP is flexibly determined between: a terrestrial base station 10C or a gateway 10B; and a satellite 10A or a HAPS, in accordance with the network implementation. It is to be noted that, hereinafter, the terrestrial base station 10C and the gateway 10B are also collectively referred to as a base station 10. In addition, the terminal 20A and the VSAT 20B are also collectively referred to as a terminal 20 when the terminal 20A and the VSAT 20B are not distinguished.

It is necessary for the RP in the base station 10 to frequently broadcast information using the feeder link for the sake of simple network implementation. In addition, at the RP in the satellite 10A or the HAPS, the backward compatibility of regenerated payload or ISL/IAL is required.

The terminal 20A may calculate the value of timing advance, $TA_{Full}$, according to the formula below.

$$TA_{Full}=TA_{Feeder\ link}+TA_{Service\ link}$$

Here, $TA_{Feeder\ link}$ is an RTD (round trip delay) at the feeder link, and is calculated by $2(T_0+T_2)$.

$T_2$ is compensated for by the network, and is a value indicating the timing advance that is transparent with respect to the user. $T_2$ may be a constant number in order to simplify the implementation of the base station 10.

$T_0$ is a value indicating the timing advance common to all users, and is broadcast via SIB. It is to be noted that the reference point may be located in the service link, and, in this case, the value of $T_0$ is negative.

$TA_{Service\ link}$ is an RTD in the service link, and is calculated by $2T_1$. $T_1$ is a terminal-specific TA, and is a different value depending on the terminal location.

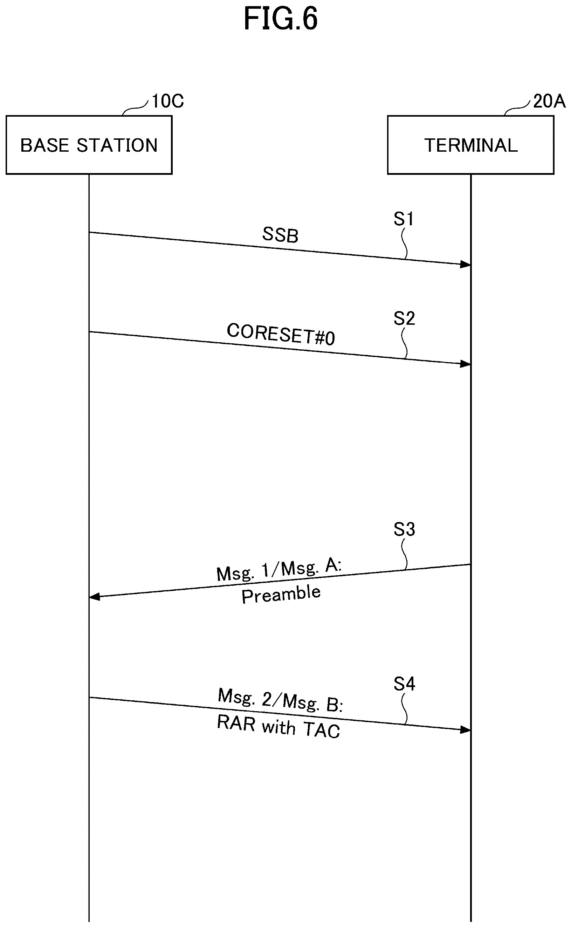

Fig. 6 is a flowchart illustrating an example of a calculation flow of the timing advance. The terminal 20 calculates a value indicating the timing advance during a period between the initial access and the RACH procedure.

The base station 10 transmits an SSB (Synchronization Signal Block) to the terminal 20 (step S1). The terminal 20 performs time or frequency synchronization in the downlink and detects an MIB (Master Information Block) included in the SSB.

Subsequently, the base station 10 transmits a CORESET (Control-resource set) #0 to the terminal 20. The terminal 20 detects an SIB (System Information Block) included in the CORESET #0 and acquires a PRACH resource and a parameter of the common TA.

Subsequently, the terminal 20 transmits a preamble using the common TA determined from the parameter included in the SIB and the self-estimated terminal-specific TA (step S3). The preamble includes Msgl or MsgA in the RACH procedure.

Subsequently, the base station 10 transmits an RAR (Random Access Response) including the TAC (Timing Advance Command) to the terminal 20 (step S4). The RAR including the TAC includes Msg2 or MsgB in the RACH procedure. $N_{TA}$ is determined based on the TAC. The terminal 20 uses, for the sake of uplink synchronization, the common TA determined from the parameter included in the SIB, the self-estimated terminal-specific TA, and the TAC included in the RAR.

In NR NTN, the TA to be applied to the terminal is being discussed to include four elements of $N_{TA}$, $N_{TA,\,common}$, $N_{TA,\,UE\text{-}specific}$, and $N_{TA,\,offset}$. The TA is obtained by $T_{TA}=(N_{TA}+N_{TA,\,common}+N_{TA,\,UE\text{-}specific}+N_{TA,\,offset})*T_C$.

It is necessary that the terminal 20 is enabled to determine the reference time of the broadcast parameters in order to easily estimate the common TA ($N_{TA,\,common}$ and the terminal-specific TA ($N_{TA,\,UE\text{-}specific}$) at a given time point within one valid period. Therefore, the reference time of the satellite orbit parameters is defined.

However, conventionally, because the reference time of the common TA parameters is not defined, in a case where the common TA parameters are updated, which time is to be the reference time of the parameter is unknown, and thus, there is a problem in that the time compensation or frequency compensation cannot be accurately performed.

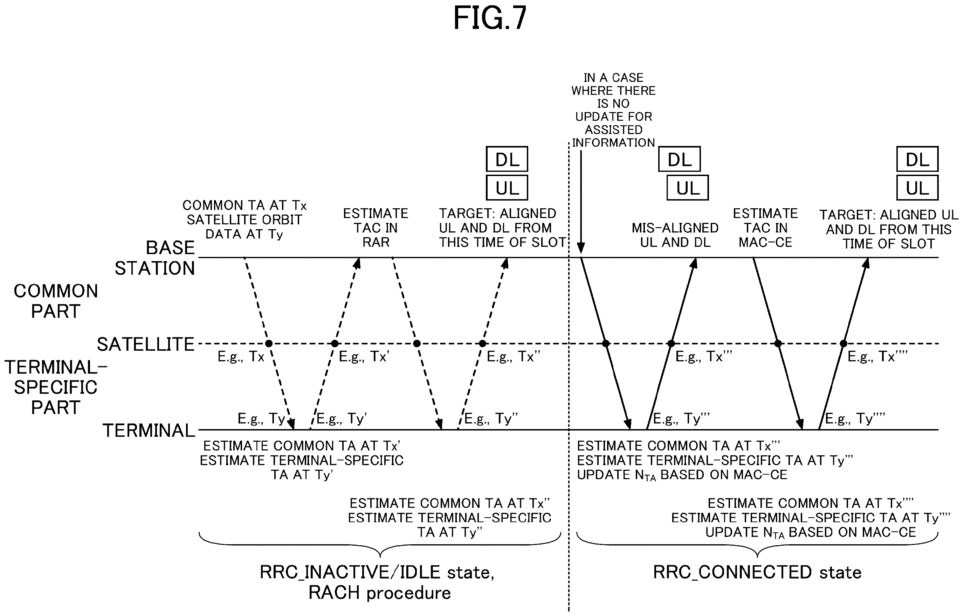

Fig. 7 is a drawing for describing a conventional calculation method of the timing advance. The reference time Ty of the satellite orbit data is implicitly indicated by the starting time of the downlink slot or frame. The terminal 20 can estimate the terminal-specific TA, based on the satellite orbit data, the reference time, and the estimated time.

As illustrated in Fig. 7, the reference time Tx of the common TA is also important for estimating the common TA on the terminal side. The base station 10 transmits the same information via SIB during a given period, and thus, this problem cannot be solved by the base station side.

Specifically, the satellite propagation model is based on the terminal implementation. It is likely that Tx', Ty', Tx", and Ty" are related to the terminal implementation. This is because the terminal can estimate the common TA and the terminal-specific TA. In addition, Tx', Ty', Tx", and Ty" are not required to be indicated by the base station 10, and can be determined by the terminal 20 for each implementation.

(Overview of embodiment)

In an embodiment of the present invention, how to define the reference time of the common TA parameter is proposed. In addition, how to indicate the reference time to the terminal or how to determine the reference time by the terminal is proposed. Hereinafter, embodiments from an embodiment 1 to an embodiment 3 will be described as specific embodiments of the present invention.

(Embodiment 1)

In this embodiment, the broadcast reference time of the common TA parameter is defined.

(Embodiment 1-1)

A default or fixed reference time of the common TA parameter may be defined.

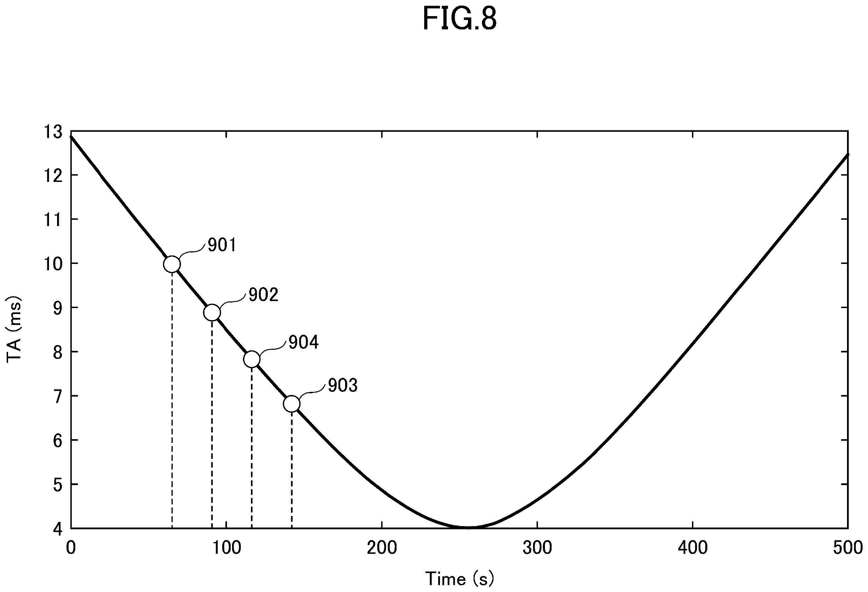

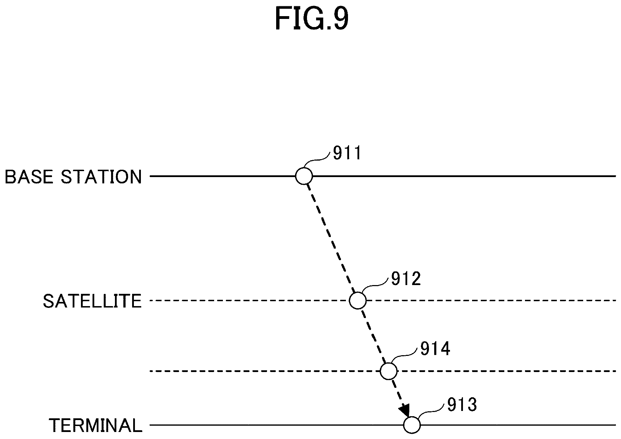

Fig. 8 is a first drawing for describing a reference time of the common TA parameter related to an embodiment 1-1. Fig. 9 is a second drawing for describing the reference time of the common TA parameter related to the embodiment 1-1.

<Option 1>

The default reference time may be defined as the broadcast time of the base station 10. In other words, the reference time is a time indicated by the point 901 in Fig. 8 and the point 911 in Fig. 9.

Due to the propagation delay, the terminal 20 cannot accurately determine the broadcast time. Therefore, in this case, for example, the base station 10 may indicate the broadcast time (reference time) together with the common TA parameter to the terminal 20.

<Option 2>

The default reference time may be defined as a time for receiving the broadcast common TA parameter by the satellite 10A, or may be defined as a time for transmitting the broadcast common TA parameter to the terminal 20 from the satellite 10A. In other words, the reference time is a time indicated by the point 902 in Fig. 8 and the point 912 in Fig. 9.

The terminal 20 can estimate the propagation delay between the satellite 10A and the terminal 20, and thus, can estimate the reference time of the point 902, based on the implementation.

<Option 3>

The default reference time may be defined as a time for receiving the broadcast common TA parameter by the terminal 20. In other words, the reference time is a time indicated by the point 903 in Fig. 8 and the point 913 in Fig. 9.

In this case, because the base station 10 does not have information of the terminal-specific TA, the reception time of the common TA parameter may become inaccurate.

<Alternative 1>

In an alternative 1, there is no more improvement with respect to the reference time. In this case, a TA error may be generated.

<Alternative 2>

In an alternative 2, the base station 10 indicates, to the terminal 20, a gap between the broadcast time at the base station 10 and the reception time by the satellite 10A together with the common TA parameter, for example.

This is because the propagation delay between the satellite 10A and the terminal 20 is known to the terminal 20. In response to the indication of the propagation delay between the base station 10 and the satellite 10A indicated by the base station 10, the terminal 20 can calculate the entire propagation delay between the base station 10 and the terminal 20, that is, the gap between the broadcast time by the base station 10 and the reception time by the terminal 20.

<Option 4>

The default reference time may be defined as a reception time at the reference point (RP). In other words, the reference time is a time indicated by the point 904 in Fig. 8 and the point 914 in Fig. 9.

By defining the reference point in advance, the base station 10 can determine the total propagation delay between the base station 10 and the reference point. This option can be applied both to the terminal with the GNSS function and to the terminal without the GNSS function. The reference point may be the same as a reference point related to determination of the terminal-specific TA by the terminal without the GNSS function.

It is to be noted that the reference time in each option is defined according to the starting time of at least one of the downlink symbol, sub-slot, subframe, and frame (radio frame).

(Embodiment 1-2)

A flexible reference time of the common TA parameter may be defined.

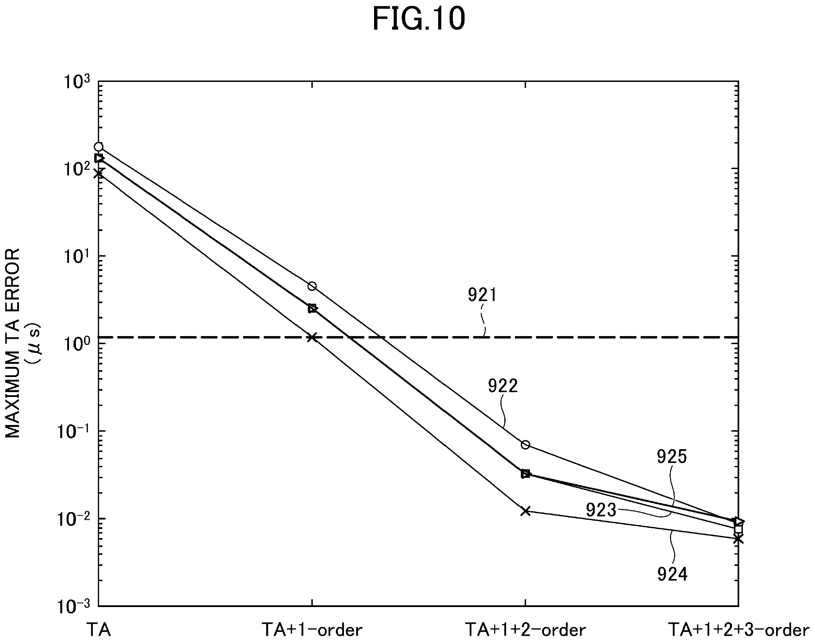

Fig. 10 is a drawing for describing the relationship between the reference time of the common TA parameter and the estimation of the common TA. The dotted line 921 is an upper limit of the TA error and indicates a value of CP/4 in a case where the SCS is 15 kHz.

A polygonal line 922 indicates the TA error in a case where the valid period of the common TA parameter is 4 seconds and the reference time is 0. A polygonal line 923 indicates the TA error in a case where the valid period of the common TA parameter is 4 seconds and the reference time is T/4. A polygonal line 924 indicates the TA error in a case where the valid period of the common TA parameter is 4 seconds and the reference time is T/2. A polygonal line 925 indicates the TA error in a case where the valid period of the common TA parameter is 4 seconds and the reference time is 3T/4.

Thus, in a case where the reference time of the common TA parameter is different, there may be a case in which a state of the TA error generation in one valid period is different. The reference time of the common TA parameter affects the estimation of the common TA by the terminal 20.

According to this evaluation, there may be a case of different timing error generation when the reference time of the common TA parameter is different. For example, an example in Fig. 10 indicates that the reference time that has an offset equal to the half of the valid period achieves the minimum TA error. However, in a case other than the case of Fig. 10, the reference time with the maximum performance (that is, the first TA error) may be different from the reference time of the case of Fig. 10.

<Option 1>

The base station 10 may define a flexible reference time and may explicitly indicate the defined reference time to the terminal 20. For example, the base station 10 may indicate, to the terminal 20, the reference time of the common TA parameter together with the common TA parameter.

<Option 2>

A set of available reference times may be defined in advance, and the base station 10 may indicate, to the terminal 20, an index of the reference time of the set defined in advance.

For example, a series of reference times are defined in advance as described below.

{Broadcast time of the common TA, reception time at the satellite, reception time at the terminal, the common TA + broadcast time of an offset 1, the common TA + broadcast time of an offset 2, ...}

11 **EP 4 412 274 A1** 12

When the broadcast times of the common TA are defined as the reference time, the base station 10 may indicate an index 0 to the terminal 20, for example.

It is to be noted that the offset value may be related to or is not required to be related to the valid period of the common TA parameter.

(Embodiment 1-3)

In a case where the same set of the common TA parameters are broadcast without updating via a plurality of SIB transmissions, the reference time of the common TA parameter may be defined by being associated with the SIB.

The common TA parameter is broadcast via each SIB, and, in a case of N>=1, the common TA parameter is updated for the Nth SIB transmission.

In a case of N=1, that is, in a case where the common TA parameter is updated for each SIB transmission, the terminal 20 may use the reference time of the common TA parameter as defined in the embodiment 1-1 and the embodiment 1-2.

In a case of N>1, that is, in a case where the common TA parameter is updated for a plurality of SIB transmissions, the terminal 20 may further combine the reference time of the common TA parameter as defined in the embodiment 1-1 and the embodiment 1-2 with information based on the SIB.

<Option 1>

The fixed or flexible reference time of the common TA parameter indicated in the embodiment 1-1 or the embodiment 1-2 may be always defined for the first SIB transmission with the update.

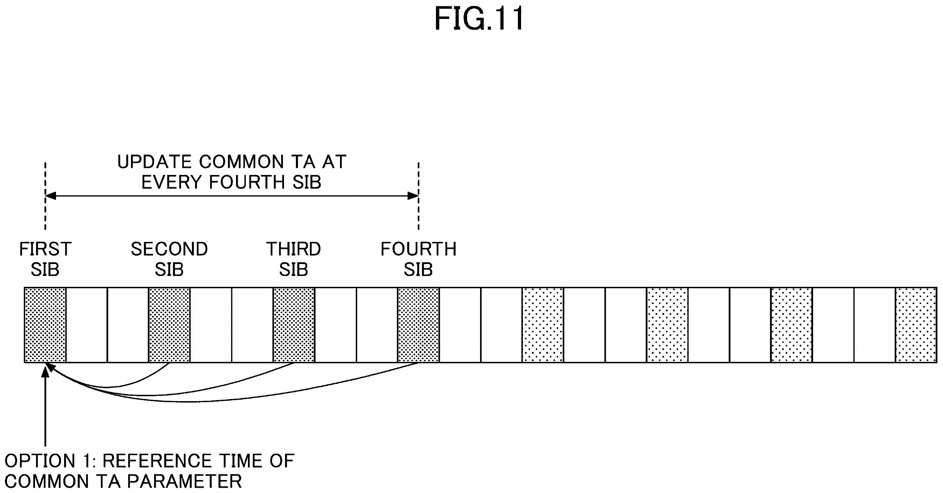

Fig. 11 is a drawing for describing a method of defining the reference time related to an option 1 of an embodiment 1-3. In this case, the common TA is updated in every fourth SIB, and the reference time of the common TA parameter is defined for the first SIB transmission.

<Option 2>

The fixed or flexible reference time of the common TA parameter indicated in the embodiment 1-1 or the embodiment 1-2 may be defined for the n-th SIB transmission after the update.

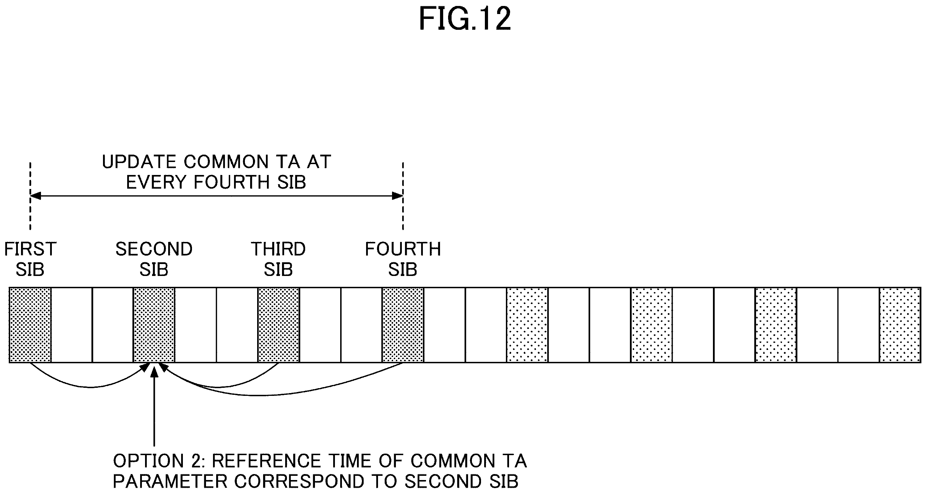

Fig. 12 is a drawing for describing a method of defining the reference time related to an option 2 of an embodiment 1-3. In this case, the common TA is updated in every fourth SIB, and the reference time of the common TA parameter is defined for the second SIB transmission.

In this case, the base station 10 may indicate, to the terminal 20, the periodicity of the SIB update and the relative offset n, via each SIB.

<Option 3>

In a case of a flexible reference time in the set of the embodiment 1-2, the value in the set may correspond to a different SIB transmission. For example, the n-th value in the set of reference times may correspond to the n-th SIB transmission.

<Option 4>

A plurality of common TA parameters and a plurality of reference times may be defined. Furthermore, each combination of the common TA parameter and the reference time may correspond to a single SIB. It is to be noted that the terminal 20 may take into account the relative gap or offset between a plurality of TA parameters and the relative gap or offset between a plurality of reference times.

(Embodiment 1-4)

The reference time may be defined as a gap between the actual reference time of the common TA parameter and the reference time (Epoch time) of the satellite orbit data.

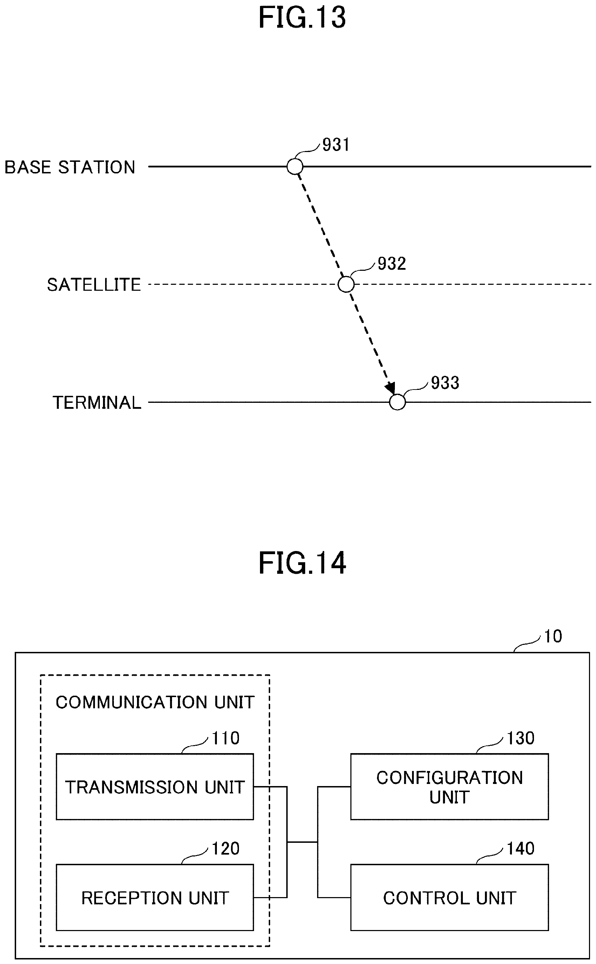

Fig. 13 is a drawing for describing a gap between two reference times related to an embodiment 1-4. The point 931 indicates the broadcast time of the base station 10. The point 932 indicates a time for receiving the common TA parameter broadcast by the satellite 10A, or a time for transmitting the common TA parameter broadcast by the satellite 10A to the terminal 20.

The point 933 indicates a time for receiving the broadcast common TA parameter by the terminal 20. The gap between the two reference times indicated by the point 932 and the point 933 corresponds to the terminal-specific TA determined by the terminal 20.

Therefore, the terminal 20 can implicitly calculate the reference time of the common TA parameter, based on the reference time (Epoch time) of the satellite orbit data and the terminal-specific TA.

<Option 1>

The reference time defined by the gap may be defined in advance as the default definition in the technical specifications without additional indication.

For example, the gap is defined in advance as the terminal-specific TA. In addition, the terminal 20 implicitly obtains the reference time of the common TA by using the estimated terminal-specific TA and the reference time (Epoch time) of the satellite orbit data.

<Option 2>

The reference time defined by the gap may be explicitly indicated by the base station 10.

For example, in another case (for example, dif-

7

ferent flexible definition of the reference time of the common TA parameter), the relationship between the reference time of the common TA parameter and the reference time of the satellite orbit data (Epoch time) is not fixed. Therefore, the base station 10 may explicitly indicate the reference time of the common TA parameter to the terminal 20.

(Embodiment 2)

In this embodiment, a definition of a signaling method of the reference time of the common TA parameter to be broadcast will be described.

(Embodiment 2-1)

A new signaling may be defined by SIB, RRC, or MAC-CE, and may indicate the broadcast reference time of the common TA parameter.

(Embodiment 2-2)

In order to include the reference time, the common TA parameter may be defined by SIB, RRC, or MAC-CE. For example, the common TA parameter may be defined as described below.

- Common TA
- Change rate of the common TA
- (Option) High-order derivatives of the common TA
- Reference time of the common TA

(Embodiment 2-3)

A plurality of common TA parameters and reference times may be defined by SIB, RRC, or MAC-CE.
For example, three sets of common TA parameters and reference times may be defined as described below.
Set 1: {common TA 1, change rate 1 of the common TA, reference time 1 of the common TA 1}
Set 2: {common TA 2, change rate 2 of the common TA, reference time 2 of the common TA 2}
Set 3: {common TA 3, change rate 3 of the common TA, reference time 3 of the common TA 3}

In addition, for example, three sets of parameters including a relative gap may be defined.
Set 1: {common TA, change rate of the common TA, reference time of the common TA}
Set 2: {Δ common TA 1, Δ change rate 1 of the common TA, Δ reference time 1 of the common TA}
Set 3: {Δ common TA 2, Δ change rate 2 of the common TA, Δ reference time 2 of the common TA} relative to set 1 or set 2

It is to be noted that, as described in the embodiment 1, the reference time will be as follows.
The reference time may be an absolute value of the starting time of the downlink slot or frame. The reference time may be, for example, the starting time of at least one of the downlink symbol, sub-slot, slot, subframe, frame (radio frame) with respect to the transmission time at the base station 10.
In addition, the reference time may be the starting time of at least one of the downlink symbol, sub-slot, slot, subframe, frame (radio frame) with respect to the transmission time at the satellite 10A.
Alternatively, the reference time may be the starting time of at least one of the downlink symbol, sub-slot, slot, subframe, frame (radio frame) with respect to the transmission time at the terminal 20 or the reference point (RP).
The reference time may be a relative value of the propagation delay between some links, for example, between the base station and the satellite. In addition, the reference time may be an absolute value of the starting time of the downlink slot or frame accompanied by several offsets such as an offset related to the valid period. In addition, the reference time may be an index indicating a reference time of one or more pre-defined sets.
In addition, the reference time may be a relative value that defines a gap between the reference time of the common TA and the reference time of the satellite orbit data.
Extension: the definition and signaling of the reference time of the common TA parameter in the embodiment 1 and the embodiment 2 may be extended to or reused as the definition and signaling of the reference time of the satellite orbit data.

(Embodiment 3)

UE capability is defined that indicates whether to support the signaling related to the fixed, flexible, or implicitly-indicated reference time and whether to report the function of the signaling.
Information may be defined as the terminal capability (UE Capability) that indicates whether to support the default or fixed reference time of the common TA parameter.
Information may be defined as the terminal capability (UE Capability) that indicates whether to support the broadcast time of the base station as the reference time.
Information may be defined as the terminal capability (UE Capability) that indicates whether to support the transmission and reception time on the satellite side as the reference time.
Information may be defined as the terminal capability (UE Capability) that indicates whether to support the transmission and reception time on the UE side as the reference time.

Information may be defined as the terminal capability (UE Capability) that indicates whether to support the flexible reference time of the common TA parameter.

Information may be defined as the terminal capability (UE Capability) that indicates whether to support the reference time that is explicitly indicated with respect to the common TA parameter. The explicitly-indicated reference time may be an index of a reference time in a set in which reference times are directly indicated or predefined.

Information may be defined as the terminal capability (UE Capability) that indicates whether to support the implicit and/or explicit indication of the reference time of the common TA based on the reference time of the satellite orbit data.

The terminal may indicate the terminal capability to the base station via an upper layer parameter such as RRC, MAC-CE, and the like. The base station may determine a method of determining and indicating the reference time of the common TA parameter and the terminals to be indicated via RRC or MAC-CE, based on the indication of the terminal capability.

(Device configuration)

Next, a functional configuration example of the base station 10 and the terminal 20 for performing the processes and operations described above will be described. The base station 10 and terminal 20 include functions for implementing the embodiments described above. It should be noted, however, that each of the base stations 10 and the terminal 20 may include only proposed functions in one of the embodiments.

<Base station 10>

Fig. 14 is a diagram illustrating an example of a functional configuration of the base station 10. As shown in Fig. 14, the base station 10 includes a transmission unit 110, a reception unit 120, a configuration unit 130, and a control unit 140. The functional structure illustrated in Fig. 14 is merely an example. Functional divisions and names of functional units may be anything as long as operations according to an embodiment of the present invention can be performed. The transmission unit 110 and the reception unit 120 may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function of transmitting NR-PSS, NR-SSS, NR-PBCH, DL/UL control signals, the DL data, and the like, to the terminal 20. In addition, the transmission unit 110 transmits configuration information, or the like, described in the embodiment.

The configuration unit 130 stores preset configuration information and various configuration information items to be transmitted to the terminal 20 in a storage apparatus and reads the preset configuration information from the storage apparatus if necessary. The control unit 140 controls the entire base station 10 including, for example, control of signal transmission and reception. Note the functional unit related to signal transmission in the control unit 140 may be included in the transmission unit 110, and the functional unit related to signal reception in the control unit 140 may be included in the reception unit 120. Further, the transmission unit 110 and the reception unit 120 may be referred to as a transmitter and a receiver, respectively.

<Terminal 20>

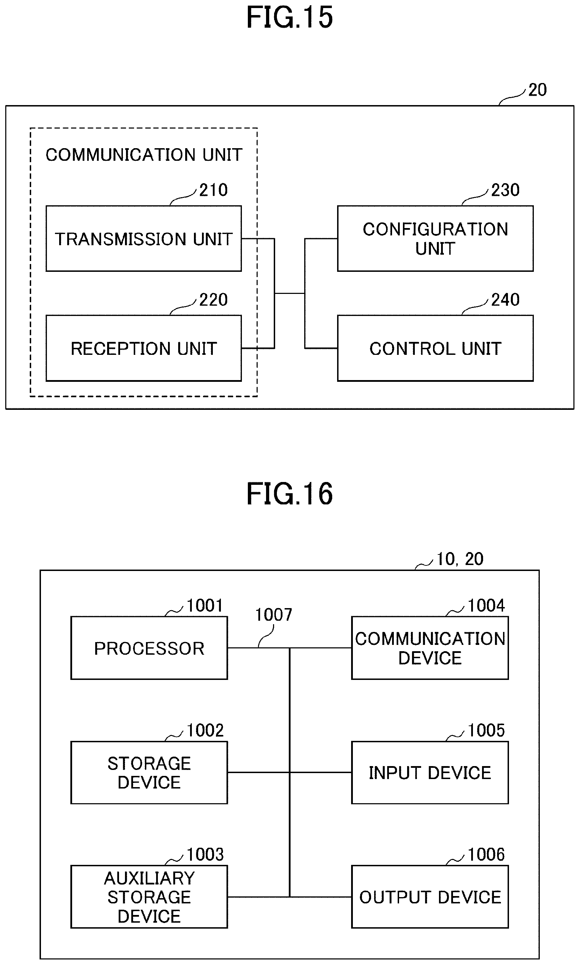

Fig. 15 is a diagram illustrating an example of a functional configuration of the terminal 20. As shown in FIG. 15, the terminal 20 includes a transmission unit 210, a reception unit 220, a configuration unit 230, and a control unit 240. The functional structure illustrated in Fig. 15 is merely an example. Functional divisions and names of functional units may be anything as long as operations according to an embodiment of the present invention can be performed. The transmission unit 210 and the reception unit 220 may be referred to as a communication unit.

The transmission unit 210 generates a transmission signal from transmission data and transmits the transmission signal wirelessly. The reception unit 220 receives various signals wirelessly and obtains upper layer signals from the received physical layer signals. In addition, the transmission unit 210 transmits a HARQ-ACK, and the reception unit 220 receives configuration information described in the embodiment.

The configuration unit 230 stores, in a storage device, various configuration information items received from the base station 10 via the reception unit 220, and reads them from the storage device if necessary. In addition, the configuration unit 230 also stores pre-configured configuration information. The control unit 240 controls the entire terminal 20 including control related to signal transmission and reception. Note the functional unit related to signal transmission in the control unit 240 may be included in the transmission unit 210, and the functional unit related to signal reception in the control unit 240 may be included in the reception unit 220. Further, the transmission unit 210 and the reception unit 220 may be referred to as a transmitter and a receiver, respectively.

A terminal according to an embodiment of the present invention may be configured as a terminal described in each item below. In addition, a communication method below may be performed.

<Configuration related to an embodiment of the present invention> (First item)

A terminal that performs a communication with a base station via a satellite or a flying object, the terminal comprising:

a reception unit configured to receive, from the base station in the communication with the base station, a parameter for updating a value of a timing advance common to a plurality of terminals; and
a control unit configured to calculate the value of the timing advance, based on the parameter, wherein a reference time of the parameter is defined.

(Second item)

The terminal as described in the first item, wherein the reference time of the parameter is defined as a fixed value.

(Third item)

The terminal as described in the first item, wherein the reception unit receives information indicating the defined reference time of the parameter from the base station.

(Fourth item)

The terminal as described in the first item, wherein the reference time of the parameter is predefined by being associated with the information transmitted from the base station.

(Fifth item)

The terminal as described in the first item, wherein the reference time of the parameter is defined as a gap between an actual reference time of the parameter and a reference time of satellite orbit data.

(Sixth item)

A communication method performed by a terminal that performs a communication with a base station via a satellite or a flying object, the communication method comprising:

receiving, from the base station in the communication with the base station, a parameter for updating a value of a timing advance common to a plurality of terminals; and
calculating the value of the timing advance, based on the parameter, wherein a reference time of the parameter is defined.

According to any one of the above configurations, a technology is provided that enables to perform an accurate time or frequency compensation in the non-terrestrial network. According to the second item, the reference time of the parameter can be clearly defined as a fixed value. According to the third item, the reference time of the parameter can be flexibly defined. According to the fourth item, the reference time of the parameter can be defined by being associated with SIB, etc. According to the fifth item, the reference time of the parameter can be defined as a gap between the actual reference time of the parameter and the reference time of the satellite orbit data.

(Hardware structure)

In the above functional structure diagrams used for describing an embodiment of the present invention (Fig. 14 and Fig. 15), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.
Functions include, but are not limited to, judging, determining, calculating, processing, deriving, investigating, searching, checking, receiving, transmitting, outputting, accessing, resolving, selecting, establishing, comparing, assuming, expecting, and deeming; broad-casting, notifying, communicating, forwarding, configur-ing, reconfiguring, allocating, mapping, and assigning, etc. For example, a functional block (component) that functions to transmit is called a transmitting unit or a transmitter. In either case, as described above, the implementation method is not particularly limited.
For example, the base station 10, terminal 20, etc., according to an embodiment of the present disclosure may function as a computer for processing the radio communication method of the present disclosure. Fig. 16 is a drawing illustrating an example of hardware structures of the base station 10 and terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.
It should be noted that, in the descriptions below, the term "apparatus" can be read as a circuit, a device, a unit, etc. The hardware structures of the base station 10 and terminal 20 may include one or more of each of the devices illustrated in the figure, or may not include some devices.

Each function in the base station 10 and terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 14 may be realized by control programs that are stored in the storage device 1002 and are executed by the processor 1001. Further, for example, the control unit 240 of the terminal 20 illustrated in Fig. 15 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disc, digital versatile disc, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission or reception device) for communicating with computers via at least one of a wired network and a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

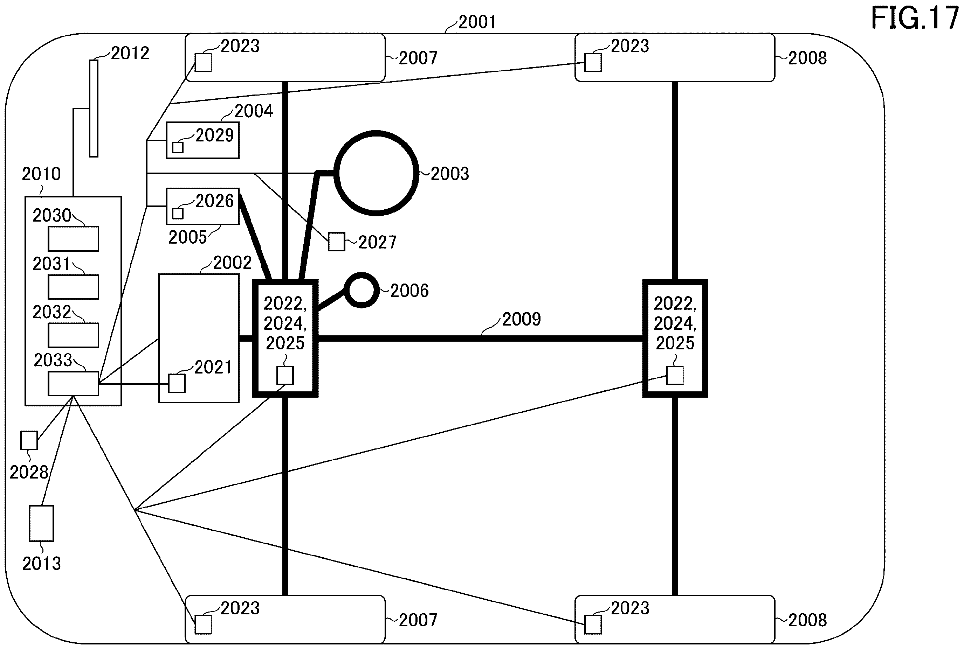

Fig. 17 shows an example of a configuration of a vehicle 2001. As shown in Fig. 17, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel (also called a handle) and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021-29 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the accelerator pedal stepped-in signal acquired by the accelerator pedal sensor 2029, the brake pedal stepped-in signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in vehicle 2001.

(Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system (6G), xth generation mobile communication system (xG) (xG (x is, for example, an integer, decimal)), FRA (Future Radio Access), NR (new Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced, modified, developed, or defined therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middleware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of abase station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication apparatus, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The "determining" may include, for example, a case in which "judging", "calculating", "computing", "processing", "deriving", "investigating", "looking up, search, inquiry" (e.g., looking up a table, database, or other data structures), or "ascertaining" is deemed as "determining". Further, the "determining" may include a case in which "receiving" (e.g., receiving information), "transmitting" (e.g., transmitting information), "inputting", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission or reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a terminal 20, one or more BWPs may be configured in one carrier.

At least one of the configured BWPs may be activated, and the terminal 20 may assume that the terminal 20 will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

DESCRIPTION OF THE REFERENCE NUMERALS

  10 Base station
  10A Satellite
  10B Gateway
  10C Terrestrial base station
  10D CN
  10E Flying object
  110 Transmission unit
  120 Reception unit
  130 Configuration unit
  140 Control unit
  20 Terminal
  210 Transmission unit
  220 Reception unit
  230 Configuration unit
  240 Control unit
  30 Core network
  1001 Processor
  1002 Storage device
  1003 Auxiliary storage device
  1004 Communication device
  1005 Input device
  1006 Output device
  2001 Vehicle
  2002 Drive unit

2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

**Claims**

1. A terminal that performs a communication with a base station via a satellite or a flying object, the terminal comprising:

   a reception unit configured to receive, from the base station in the communication with the base station, a parameter for updating a value of a timing advance common to a plurality of terminals; and
   a control unit configured to calculate the value of the timing advance, based on the parameter, wherein
   a reference time of the parameter is defined.

2. The terminal as claimed in claim 1, wherein the reference time of the parameter is defined as a fixed value.

3. The terminal as claimed in claim 1, wherein the reception unit receives information indicating the defined reference time of the parameter from the base station.

4. The terminal as claimed in claim 1, wherein the reference time of the parameter is predefined by being associated with the information transmitted from the base station.

5. The terminal as claimed in claim 1, wherein the reference time of the parameter is defined as a gap between an actual reference time of the parameter and a reference time of satellite orbit data.

6. A communication method performed by a terminal that performs a communication with a base station via a satellite or a flying object, the communication method comprising:

   receiving, from the base station in the communication with the base station, a parameter for updating a value of a timing advance common to a plurality of terminals; and
   calculating the value of the timing advance, based on the parameter, wherein
   a reference time of the parameter is defined.

# FIG.1

EP 4 412 274 A1

# FIG.2

EP 4 412 274 A1

# FIG.3

GEO

ALTITUDE: 35,786 km
GEOSYNCHRONOUS ORBIT

LEO

ALTITUDE: 500 – 2,000 km
ORBITAL PERIOD: 88 – 127 min

} SATELLITE (SPACEBORNE)

HAPS

ALTITUDE: 8 – 50 km
TURNING FLIGHT

} FLYING OBJECT (AIRBORNE)

gNB    GATEWAY

GEO
LEO
HAPS

EP 4 412 274 A1

# FIG.4

EP 4 412 274 A1

# FIG.5

COMMON TA
$T_0$

USER
TRANSPARENT
$T_2$

REFERENCE POINT

10A

TERMINAL
SPECIFIC TA
$T_1$

10B

20A

One beam/cell

# FIG.6

# FIG.7

IN A CASE WHERE THERE IS NO UPDATE FOR ASSISTED INFORMATION

COMMON TA AT Tx
SATELLITE ORBIT
DATA AT Ty

ESTIMATE
TAC IN
RAR

TARGET: ALIGNED
UL AND DL FROM
THIS TIME OF SLOT

MIS-ALIGNED
UL AND DL

ESTIMATE
TAC IN
MAC-CE

TARGET: ALIGNED UL
AND DL FROM THIS
TIME OF SLOT

BASE STATION

COMMON PART

SATELLITE

TERMINAL-SPECIFIC PART

TERMINAL

E.g., Tx
E.g., Tx'
E.g., Tx"
E.g., Tx'''
E.g., Tx''''

E.g., Ty
E.g., Ty'
E.g., Ty"
E.g., Ty'''
E.g., Ty''''

ESTIMATE COMMON TA AT Tx'
ESTIMATE TERMINAL-SPECIFIC
TA AT Ty'

ESTIMATE COMMON TA AT Tx'''
ESTIMATE TERMINAL-SPECIFIC TA AT Ty'''
UPDATE $N_{TA}$ BASED ON MAC-CE

ESTIMATE COMMON TA AT Tx"
ESTIMATE TERMINAL-SPECIFIC
TA AT Ty"

ESTIMATE COMMON TA AT Tx''''
ESTIMATE TERMINAL-SPECIFIC TA AT Ty''''
UPDATE $N_{TA}$ BASED ON MAC-CE

RRC_INACTIVE/IDLE state,
RACH procedure

RRC_CONNECTED state

EP 4 412 274 A1

# FIG.8

# FIG.9

BASE STATION ─────────○─────────────────
                          911

SATELLITE  ─ ─ ─ ─ ─ ─ ─ ─○─ ─ ─ ─ ─ ─
                             912

         ─ ─ ─ ─ ─ ─ ─ ─ ─ ─○─ ─ ─ ─
                              914

TERMINAL ───────────────────○──────────
                             913

# FIG.10

EP 4 412 274 A1

FIG.11

UPDATE COMMON TA AT EVERY FOURTH SIB

FIRST SIB

SECOND SIB

THIRD SIB

FOURTH SIB

OPTION 1: REFERENCE TIME OF COMMON TA PARAMETER

# FIG.12

UPDATE COMMON TA AT
EVERY FOURTH SIB

FIRST SIB  SECOND SIB  THIRD SIB  FOURTH SIB

OPTION 2: REFERENCE TIME OF COMMON TA
PARAMETER CORRESPOND TO SECOND SIB

EP 4 412 274 A1

# FIG.13

BASE STATION ⎯⎯⎯⎯⎯⎯⎯◯⎯⎯⎯⎯⎯⎯⎯ 931

SATELLITE -------◯------- 932

TERMINAL ⎯⎯⎯⎯⎯⎯⎯◯⎯⎯⎯⎯⎯⎯⎯ 933

# FIG.14

10

COMMUNICATION UNIT

110
TRANSMISSION UNIT

120
RECEPTION UNIT

130
CONFIGURATION UNIT

140
CONTROL UNIT

# FIG.15

20

COMMUNICATION UNIT

210

TRANSMISSION UNIT

220

RECEPTION UNIT

230

CONFIGURATION UNIT

240

CONTROL UNIT

# FIG.16

10, 20

1001

PROCESSOR

1007

1004

COMMUNICATION DEVICE

1002

STORAGE DEVICE

1005

INPUT DEVICE

1003

AUXILIARY STORAGE DEVICE

1006

OUTPUT DEVICE

FIG.17

EP 4 412 274 A1

## INTERNATIONAL SEARCH REPORT

International application No.

**PCT/JP2021/035987**

### A. CLASSIFICATION OF SUBJECT MATTER

*H04W 16/26*(2009.01)i; *H04W 56/00*(2009.01)i; *H04W 84/06*(2009.01)i
FI:   H04W56/00 130; H04W16/26; H04W84/06

According to International Patent Classification (IPC) or to both national classification and IPC

### B. FIELDS SEARCHED

Minimum documentation searched (classification system followed by classification symbols)

H04W16/26; H04W56/00; H04W84/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | LG ELECTRONICS. Discussions on UL time and frequency synchronization enhancements in NTN. 3GPP TSG RAN WG1 #106-e R1- 2107539. 07 August 2021, <URL:https://www.3gpp.org/ftp/tsg_ran/WG1_RL1/TSGR1_106-e/Docs/R1-2107539.zip><br>2.1.1.Regarding common TA tracking | 1-6 |

| ☐ Further documents are listed in the continuation of Box C. | ☐ See patent family annex. |

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 April 2022** | **26 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS 38.300 V16.6.0,* June 2021